# EUROPEAN PATENT SPECIFICATION

(11) **EP 3 494 240 B1**
(45) Date of publication and mention of the grant of the patent: **29.09.2021**
(21) Application number: 17836093.9
(22) Date of filing: 02.08.2017
(51) Int. Cl.: C22B 26/12, C22B 3/12

(54) **CAUSTIC DIGESTION PROCESS**
KAUSTISCHES AUFSCHLUSSVERFAHREN
PROCÉDÉ DE DIGESTION CAUSTIQUE

(30) Priority: 02.08.2016 AU 2016903041
(43) Date of publication of application: 12.06.2019
(73) Proprietor: Lithium Australia NL, West Perth, Western Australia 6005 (AU)
(72) Inventor: CATOVIC, Enej, Mount Pleasant, Western Australia 6153 (AU)
(74) Representative: Dehns
(86) International application number: PCT/AU2017/050808
(87) International publication number: WO 2018/023159

(56) References cited:
- CN-A- 103 290 217
- CN-A- 104 003 428
- GB-A- 934 447
- US-A- 3 112 170
- US-A- 3 112 170
- US-A1- 2006 171 869
- US-A1- 2006 171 869

## Description

### Technical Field

The present disclosure relates to a caustic digestion process for recovering lithium values from lithium-bearing materials. In particular, the present disclosure relates to a caustic digestion process for recovering lithium carbonate and/or lithium hydroxide from lithium-bearing silicates.

### Background

Global supply of lithium is currently sourced from brines or hard rock deposits.

In the former, lithium is concentrated as soluble salts by solar evaporation. Lithium produced from brines is generally of a low grade and, while the capital input for brine production is high, operating costs are low.

In the case of hard rock deposits conventional mining and beneficiation techniques are used to produce high grade spodumene concentrate. It is possible to obtain lithium chemicals of technical, battery grade (99.5%) or high-purity (>99.9%) lithium carbonate from various acid-roasting and lime-roasting processes.

The acid-roasting method involves firstly decrepitation (at 1070-1090 °C) to convert α-spodumene to the more reactive β-structure, followed by sulphation using sulphuric acid at 250 °C and water leaching of the calcine at 90 °C to extract lithium into solution. The lime-roasting process, on the other hand, relies on the roasting of spodumene and lime at 1030-1040 °C before water-leaching the clinker produced to recover lithium. Other routes used to extract lithium from spodumene via pressure leaching with soda ash or chlorination roasting have also been proposed.

All of these processes involve a roasting step with significant reagent consumption prior to leaching. The high energy cost associated with roasting low-grade lithium concentrates has proven uneconomic.

There is therefore a need for alternative or improved processes to recover lithium from silicate materials.

US 2006/171869 A1 relates to a method of extracting lithium from a lithium bearing mineral comprising: reacting a lithium bearing mineral with a basic material of sufficient strength to dissolve the mineral, to produce a product mixture containing lithium; and recovering the lithium from the product mixture.

It is to be understood that, if any prior art publication is referred to herein, such reference does not constitute an admission that the publication forms a part of the common general knowledge in the art, in Australia or any other country.

### Summary

The present disclosure provides a process for extracting lithium values from a lithium silicate, in particular from lithium-bearing silicates such as spodumene and lepidolite. The present disclosure also provides a process for recovering lithium values as lithium carbonate and/or lithium hydroxide from a lithium silicate.

According to a first aspect of the disclosure, there is provided a process for extracting lithium values from a lithium silicate comprising the steps of:
a) heating a mixture of the lithium silicate and a concentrated sodium hydroxide solution with a concentration in a range of 40-80 wt% up to 350 °C;
b) diluting the heated mixture from step a) to 5-20% w/w caustic strength; and
c) removing aluminates and silicates from the diluted heated mixture from step
b) to produce a pregnant lithium solution.

In an alternative embodiment, heating said mixture comprises baking said mixture at a temperature in a range of 250 °C to 350 °C at atmospheric pressure.

In an alternative embodiment, heating said mixture comprises heating in a range of 200 °C to 300 °C in an autoclave.

The heated mixture from step a) is diluted to 5-20% w/w caustic strength.

In one embodiment, removing aluminates and silicates from the diluted heated mixture from step c) comprises adding lime to the diluted heated mixture in an amount sufficient to produce calcium aluminate and calcium silicate solids and separating said solids therefrom.

According to another aspect of the disclosure, there is provided a process for recovering lithium values from a lithium silicate comprising the steps of:
a) extracting lithium values from a lithium silicate to produce a pregnant lithium solution according to the steps defined in the first aspect of the disclosure;
b) evaporating the pregnant lithium solution to increase a lithium concentration thereof; and,
c) recovering lithium carbonate and/or lithium hydroxide from the evaporated pregnant lithium solution.

In one embodiment, recovering lithium carbonate comprises contacting the evaporated pregnant lithium solution with carbon dioxide to produce lithium carbonate solids and a barren lithium solution.

In an alternative embodiment, recovering lithium hydroxide comprises lowering the temperature of the evaporated pregnant lithium solution to produce lithium hydroxide solids and a barren lithium solution. The barren lithium solution may be further treated with carbon dioxide to recover lithium carbonate therefrom.

Said solids may be separated from the barren lithium solution. In one embodiment the barren lithium solution may be recycled by mixing with the mixture of lithium silicate and caustic in step a). Further by-products, such as potassium hydroxide, may be produced from the barren lithium solution prior to recycling said solution to step a)

In one embodiment, evaporating the pregnant lithium solution increases the lithium concentration thereof to 8-10 g/L.

### Brief Description of Drawings

Notwithstanding any other forms which may fall within the scope of the process as set forth in the Summary, specific embodiments will now be described, by way of example only, with reference to the accompanying figures in which:

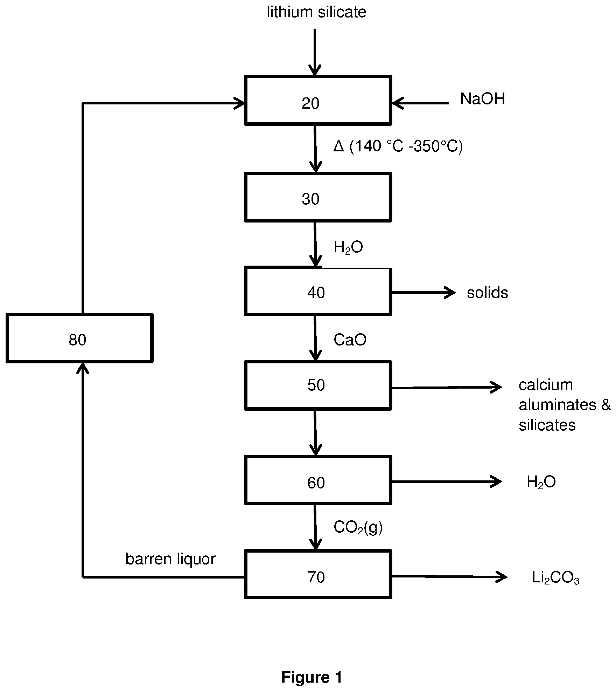

Figure 1 is a process flow sheet depicting a process for recovery of lithium carbonate from lithium silicates.

### Description of Embodiments

The present invention is described in the following various non-limiting embodiments, which relate to a process for recovering lithium values, in particular lithium carbonate or lithium hydroxide, from lithium silicates.

### GENERAL TERMS

Throughout this specification, unless specifically stated otherwise or the context requires otherwise, reference to a single step, composition of matter, group of steps or group of compositions of matter shall be taken to encompass one and a plurality (i.e. one or more) of those steps, compositions of matter, groups of steps or groups of compositions of matter. Thus, as used herein, the singular forms "a", "an" and "the" include plural aspects unless the context clearly dictates otherwise. For example, reference to "a" includes a single as well as two or more; reference to "an" includes a single as well as two or more; reference to "the" includes a single as well as two or more and so forth.

Each example of the present disclosure described herein is to be applied mutatis mutandis to each and every other example unless specifically stated otherwise. The present disclosure is not to be limited in scope by the specific examples described herein, which are intended for the purpose of exemplification only. Functionally-equivalent products, compositions and methods are clearly within the scope of the disclosure as described herein.

The term "and/or", e.g., "X and/or Y" shall be understood to mean either "X and Y" or "X or Y" and shall be taken to provide explicit support for both meanings or for either meaning.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

It will be clearly understood that, although a number of prior art publications are referred to herein, this reference does not constitute an admission that any of these documents forms part of the common general knowledge in the art, in Australia or in any other country.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the present specification, including definitions, will control. In addition, the materials, methods, and examples are illustrative only and not intended to be limiting.

### SPECIFIC TERMS

The term "lithium-bearing material" as used herein refers to any lithium containing substance. The term may be used predominantly to refer to naturally occurring minerals that contain lithium values, including but not limited to silicates, fluorophosphates, boro-silicates, aluminium silicates, phosphates such as amblygonite, lithium-containing micas, and lithium-containing clays.

It will be appreciated by those skilled in the art that the lithium-bearing material may comprise one or more naturally occurring lithium minerals because they frequently occur together, for example in pegmatite bodies. Several metals, such as Mn, Rb and Cs, and other minerals such as quartz, albite, feldspar, topaz and beryl may also be associated with these lithium minerals. Accordingly, the term "lithium-bearing material" encompasses high grade ores and concentrates as well as medium to low grade ores, concentrates and blends thereof.

The term "lithium bearing silicate" as used herein refers to a concentrate, ore, or tailings derived from one or more silicate minerals containing lithium values. Exemplary lithium bearing silicates include, but are not limited to, jadarite, spodumene and other pyroxenes, trilithionite, petalite and other lithium-bearing silicates from the nepheline group of minerals, holmquistite and other lithium-bearing silicates from the amphibole group of minerals, lepidolite, zinwaldite, elbaite and other tourmalines, chlorites, smectites, lithium-containing micas, and lithium-containing clays.

A reference to 'g/kg' or 'kg/t' throughout the specification refers to the mass of a substance per kilogram or tonne, respectively, of the lithium-bearing material.

### PROCESS FOR EXTRACTING LITHIUM VALUES

The process for extracting lithium values from lithium-bearing materials, as described herein, is a process for extracting lithium values from lithium silicates. Lithium extraction achieved by the process may be > 85%, > 90%, > 95%, or even > 98%.

Prior to undergoing the processes described herein, the lithium silicate may be ground and milled to P₁₀₀ <160 µm. In certain embodiments the lithium silicate may have a particle size with P₈₀ in a range of 20-160 µm, 40-100 µm, or in the range of 40-50 µm. The lithium silicate may be ground and milled to the desired particle size by conventional techniques well known in the art in a dry milling process or a wet milling process.

The process for extracting lithium values from a lithium silicate comprising the steps of:
a) heating a mixture of the lithium silicate and a concentrated sodium hydroxide solution with a concentration in a range of 40-80 wt% up to 350 °C;
b) diluting the heated mixture from step a) to 5-20% w/w caustic strength; and
c) removing aluminates and silicates from the diluted heated mixture from step
b) to produce a pregnant lithium solution.

In a preferred embodiment, the concentrated sodium hydroxide (NaOH) solution has a concentration in a range of 40-60 wt% or 40-50 wt%.

The resulting mixture may be stirred or mechanically agitated during the heating step.

The mixture may be heated for a period of time sufficient to achieve a particular level of extraction of lithium values. The time required for the extraction depends upon the mineralogy and particle size of the lithium silicate, the concentration of the sodium hydroxide solution, the solids density of the mixture, and the temperature conditions.

It will be appreciated by those skilled in the art that, other things being equal, the higher the temperature, the shorter the reaction time to achieve the desired level of extraction.

Generally, the mixture may be heated for a period from 1 h to 6 h, in particular 1 h to 2 h.

The process may be carried out in either a batch mode or a continuous mode. The particular choice of operation will depend upon a residence time necessary to extract the desired amount of lithium values.

In various embodiments, the lithium silicate may be mixed with the concentrated sodium hydroxide solution with a concentration in a range of 40-80 wt% to produce a mixture having a solids content in a range of from 10-50 wt%, preferably from 10-25 wt% or from 40-50 wt%.

Mixtures having a solids content at the low end of the range (10-25 wt%) may undergo 'caustic digestion' in an autoclave, whereas mixtures having a solids content at the higher end of the range (40-50 wt%) may undergo a 'caustic bake' at atmospheric pressure.

In some embodiments, the mixture having a solids content of 10-40 wt% may be heated in an autoclave at a temperature in a range of 200 °C to 300 °C for a period of 1 to 6 hours. For example about 99% extraction of lithium could be achieved by heating the mixture in an autoclave at -240 °C for 2-4 h with at least 2800 kg/t caustic.

Alternatively, in other embodiments, the mixture having a solids content of 40-50 wt% may be baked at a temperature in a range of 250 °C to 350 °C at atmospheric pressure for a period of 1 to 6 hours. In this particular embodiment, extraction of > 90% of lithium from lithium silicates such as spodumene and lepidolite (P₉₀ ∼45 µm) may be achieved after 1-2 h at 300 °C using excess of caustic from between 2600 kg/t to 4800 kg/t.

The resulting heated mixture is then diluted to 5- 20% w/w with respect to caustic solution concentration.

The resulting slurry may then undergo a conventional separation technique to separate solids from liquids. Suitable conventional separation techniques include, but are not limited to, filtration, gravity separation, centrifugation and so forth. It will be appreciated by those skilled in the art that additives such as clarifying agents and/or thickeners may be mixed into the resulting slurry prior to separating solids from liquids to facilitate efficient separation thereof.

It will be appreciated by the person skilled in the field, that one or more impurities may be co-dissolved with lithium in the separated liquid. The term "impurities" as used herein refers to a metal value, other than lithium, contained in the lithium-bearing material which is capable of dissolving under the same process conditions. Examples of typical metal values, other than lithium, include but are not limited to K, Na, Cs, Rb, Si, Al and Fe.

Soluble aluminates and silicates present in the separated liquid are then removed therefrom by treating the separated liquid with an excess of lime to precipitate calcium aluminates, calcium silicates and calcium aluminosilicates out of solution and produce a pregnant lithium solution. The precipitates are removed by a conventional separation technique, as described above.

### PROCESS FOR RECOVERING LITHIUM VALUES FROM LITHIUM-BEARING MATERIALS

After extracting the lithium values from the lithium silicate as described in the foregoing paragraphs, lithium values may be subsequently recovered from the lithium-bearing solution as lithium carbonate or lithium hydroxide.

In addition to removing calcium aluminates, calcium silicates and calcium aluminosilicates, in some embodiments the pregnant lithium solution may be passed through an ion exchange resin to remove soluble calcium therefrom.

The pregnant lithium solution is then evaporated to increase a lithium concentration thereof. The lithium concentration may be increased from 1.5 -2 g/L to 8-10 g/L or above. Evaporation of the pregnant lithium solution may be performed by boiling the pregnant lithium solution or by passing the pregnant lithium solution through an evaporator operating at reduced pressure.

Lithium carbonate may be recovered from the pregnant lithium solution having increased lithium concentration by contacting said pregnant lithium solution with carbon dioxide to produce lithium carbonate solids and a barren lithium solution. In some embodiments, said pregnant lithium solution is sparged with carbon dioxide at a steady rate of about 0.8 L/min. The temperature of said pregnant lithium solution may be in the range of 90 °C -100 °C.

The resulting lithium carbonate solids may be separated from the resulting barren lithium solution by conventional separation techniques described in the preceding paragraphs.

In an alternative embodiment, lithium hydroxide may be recovered from the pregnant lithium solution having increased lithium concentration by lowering the temperature of said pregnant lithium solution to produce lithium hydroxide solids and a barren lithium solution. Typically, said pregnant lithium solution may be cooled to about 10 °C to encourage precipitation of lithium hydroxide solids. The barren lithium solution may be further treated with carbon dioxide as described above to recover lithium carbonate therefrom.

Alternatively, the barren lithium solution may be recycled by mixing with the caustic solution and lithium-bearing material.

It will be appreciated that the lithium carbonate solids may be sold as is or further refined to produce a higher purity lithium carbonate or lithium hydroxide.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

### Examples

The invention is further illustrated by the following examples with reference to the figure. The examples are provided for illustrative purposes only. They are not to be construed as limiting the scope or content of the invention in any way.

### Example 1a. Caustic Digestion - Lepidolite

Four samples (CL-1, CL-2, CL-3 and CL-4) of lepidolite (P₈₀ 157 µm) were mixed (20) with a sodium hydroxide solution of different concentrations to provide a mixture having a solids content of 10 wt%.

Samples CL-1 and CL-2 were heated (30) to 148-154 °C for 6 hours at atmospheric pressure in conventional baffle reactors and samples CL-3 and CL-4 were heated to 220 °C and 240 °C, respectively for 4 hours in an autoclave at vapour pressure ('caustic digestion'). The operating conditions of the caustic digestion tests together with the resulting metal extraction results are provided in Table 1.

Atmospheric caustic digestion of samples CL-1 and CL-2 showed extraction up to -50% Li.

With respect to samples CL-3 and CL-4 which underwent caustic digestion under autoclave conditions, high extraction of lithium (99%) was achieved in CL-4, along with all other alkali metals such as K, Rb and Cs. The concentration profile for Li throughout the test for CL-3 showed that during the initial stages, the concentration of Li reached -2200 mg/L, however the concentration of Li in solution progressively decreased to -1400 mg/L, together with a decrease in both Al and Si concentrations. This suggests that Li was re-precipitated with silicon in this test.

### Example 1b. Caustic Digestion - Spodumene

The extraction of Li from spodumene was by caustic digestion under autoclave conditions of elevated temperature and pressure (vapour pressure only) with a 4 h residence time was examined, under similar conditions to that undertaken for lepidolite.

The extraction of Li from spodumene with P₈₀ 76 µm was 77% which was significantly greater than for spodumene with P₈₀ 100 µm (40-57%).

### Example 2. Caustic baking

The extraction of Li from lepidolite ore (P₈₀ 157 µm) was examined in two (2) sighter tests CB-1 and CB-2 using an excess of caustic at below and above the melting pint (m.p.∼330 °C) of caustic. A summary of the results from these two tests is presented in Table 2.

Extraction of Li was observed to increase with an increase in baking temperature over 1 h from 68% at 250 °C to 86% at 350 °C. The more aggressive conditions, where the caustic melts and a typical 'fusion' occurs, increased the overall extraction of the major elements.

The resulting heated mixtures were then diluted (40) to 20 wt% with respect to caustic strength with subsequent separation of solids and liquids.

### Example 3. Impurity Removal

Aluminium and Si solubilised during caustic digestion (or caustic baking) can be removed by the addition of lime ('liming out') to precipitate calcium aluminate and calcium silicate. A series of sighter Al and Si removal tests were undertaken using liquors from Tests CL-1 (atmospheric digestion). A summary of the tests undertaken and the results are presented in Table 3.

An excess of lime ranging from about 30 g/L feed to 150 g/L feed was added (50) into the separated liquid to remove Al and Si as calcium aluminate and calcium silicate precipitates. About 50% of the Al and Si impurities were removed as separated solids, leaving a pregnant lithium solution.

The lithium concentration of the pregnant lithium solution was increased to 8-10 g/L by evaporation (60).

### Example 4. Lithium Carbonate Precipitation

Lithium carbonate was precipitated (70) from the evaporated pregnant lithium solution at 90 °C to 100 °C by introducing a steady stream of carbon dioxide to said at a rate of about 0.8 L/min.. The introduced carbon dioxide was almost completely absorbed by the pregnant lithium solution (which is highly caustic) so that almost no bubbling was observed.

Approximately 70% of lithium was precipitated as lithium carbonate under these conditions (see Table 4). The final concentration of lithium in the pregnant lithium solution is dependent on the caustic strength. This demonstrates the importance of operating at the highest lithium concentration in the feed to lithium carbonate precipitation.

The purity of the lithium carbonate produced was 98% with major impurities being KOH, NaOH and Si (presumably as silicate). The lithium carbonate may be used as a feed to either a further refining step to produce high purity lithium carbonate or in a lithium hydroxide conversion process.

The barren liquor is recycled (80) back into the autoclave in order to minimise lithium losses.

### Summary of Caustic Digestion Sighter Test Work - Lepidolite

**Table 1**

| **Test** | | **CL-1** | | | **CL-2** | | | **CL-3** | | | **CL-4** | | |
|---|---|---|---|---|---|---|---|---|---|---|---|---|---|
| **Type** | | Atmospheric | | | | | | Autoclave | | | | | |
| **P₈₀ M/C** | | 157 | | | | | | | | | | | |
| **Temperature** | | 148-154°C | | | | | | 220 | | | 240 | | |
| **Residence Time** | | 6 | | | 6 | | | 4 | | | 4 | | |
| **Initial Solids** | | 10 | | | 10 | | | 10 | | | 10 | | |
| **Initial NaOH** | | 60 | | | 50 | | | 60 | | | 40 | | |
| **NaOH Addn.** (kg/t | | 5400 | | | 4482 | | | 5396 | | | 3605 | | |
| **NaOH Stoich. Consump**. (kg/t | | 900 | | | | | | | | | | | |
| **NaOH Consump.*** (kg/t | | 388 | | | 264 | | | 638 | | | 641 | | |
| **Caustic Diln.** (L/kg | | 5.0 | | | 5.8 | | | - | | | - | | |
| **Mass** Loss | | 30 | | | 30 | | | 65 | | | 63 | | |

| **Element** | **Feed** | **Residue** | **PF** | **Extraction** | **Residue** | **PF** | **Extraction** | **Residue** | **PF** | **Extraction** | **Residue** | **PF** | **Extraction** |
|---|---|---|---|---|---|---|---|---|---|---|---|---|---|
| | (wt%) | (wt%) | (mg/L) | (%) | (wt%) | (mg/L) | (%) | (wt%) | (mg/L) | (%) | (wt%) | (mg/L) | (%) |
| **Al** | 14.9 | 16.15 | 2311 | 16 | 15.53 | 2177 | 22 | 11.90 | 9385 | 34 | 16.52 | 2355 | 15 |
| **Ca** | **0.001** | **0.001** | 15 | 0 | **0.001** | 13 | 0 | **0.001** | 10 | 0 | **0.001** | **10** | 0 |
| **Cs** | 0.281 | 0.138 | 0 | 64 | 0.240 | 0 | 36 | 0.002 | 0 | 98 | 0.003 | 0 | 99 |
| **Fe** | 0.031 | 0.182 | 315 | 0 | 0.032 | 21 | 23 | 0.036 | 13 | 0 | 0.021 | 13 | -16 |
| **K** | 7.22 | 3.649 | 5395 | 63 | 6.569 | 2297 | 32 | 0.043 | 14071 | 100 | 0.043 | 12695 | 100 |
| **Li** | 1.790 | 0.899 | 998 | 63 | 0.635 | 461 | 74 | 0.888 | 778 | 63 | 0.020 | 2552 | 99 |
| **Mg** | **0.010** | **0.010** | 7 | 0 | 0.005 | **10** | 0 | **0.010** | 10 | 0 | **0.010** | **10** | 63 |
| **Mn** | 0.403 | 0.239 | 241 | 0 | 0.373 | 87 | 0 | 0.393 | 84 | 0 | 0.170 | 336 | 75 |
| **Na** | 0.400 | 9.809 | 270700 | 0 | 2.419 | 213400 | 0 | 22.59 | 405500 | 0 | 20.79 | 297700 | 0 |
| **Rb** | 1.74 | 1.281 | 0 | 46 | 1.758 | 0 | 25 | 0.016 | 0 | 100 | 0.009 | 0 | 100 |
| **S** | **0.001** | 0.006 | **100** | 0 | 0.004 | **100** | 0 | **0.001** | 10 | 0 | **0.001** | **100** | 0 |
| **Si** | 23.6 | 19.73 | 8879 | 38 | 22.36 | 5905 | 29 | 17.89 | 17894 | 45 | 17.08 | 16874 | 45 |
| **F** | nd | - | 36 | - | - | 43 | - | - | 0 | - | - | 1520 | - |

### Summary of Caustic Bake Sighter Test Work - Lepidolite

**Table 2**

| **Test #** | | **LA-CB01** | | | **LA-CB02** | | |
|---|---|---|---|---|---|---|---|
| *Caustic Bake* | | | | | | | |
| **Bake Time** (h) | | 1 | | | 1 | | |
| **Bake Temperature** (°C) | | 250 | | | 350 | | |
| **NaOH Addn.** (kg/t ore) | | 2611 | | | 2597 | | |
| **NaOH Consump.** (kg/t ore) | | 324 | | | 890 | | |
| **Mass Gain Bake** (%) | | 263 | | | 240 | | |

| *Water Leach* | | | | | | | |
|---|---|---|---|---|---|---|---|
| **Leach Time** (min./wash) | | 20 | | | 20 | | |
| **Temperature** (°C) | | 60 | | | 60 | | |
| **Wash Type** | | Repulp | | | | | |
| **Wash Number** | | 4 | | | | | |
| **Wash Ratio** (∼L/kg/wash) | | 6 | | | | | |
| **Total Wash Ratio** (L/kg) | | 24 | | | 24 | | |
| **Mass Loss Leach** (%) | | 77 | | | 75 | | |
| **Mass Loss Overall** (%) | | 15 | | | 16 | | |

| **Element** | **Feed** | **Leach Residu** | **PF** | **Extraction** | **Leach Residu** | **PF** | **Extraction** |
|---|---|---|---|---|---|---|---|
| | (wt%) | (wt%) | (mg/L) | (%) | (wt%) | (mg/L) | (%) |
| **Al** | 14.9 | 15.59 | 1849 | 12 | 15.82 | 983 | 11 |
| **Cs** | 0.281 | 0.18 | 271 | 45 | 0.194 | nd | 42 |
| **K** | 7.22 | 2.30 | 11150 | 73 | 0.99 | 13460 | 88 |
| **Li** | 1.790 | 0.68 | 2180 | 68 | 0.292 | 2560 | 86 |
| **Mn** | 0.403 | 0.30 | 186 | 38 | 0.438 | **10** | 9 |
| **Rb** | 1.74 | 0.86 | 4133 | 58 | 0.384 | nd | 81 |
| **Si** | 23.6 | 20.09 | 10880 | 28 | 17.98 | 14420 | 36 |

### Summary of Caustic Impurity Removal Sighter Test Work

**Table 3**

| **Test** | | **CR-1** | | | **CR-2** | | | | | |
|---|---|---|---|---|---|---|---|---|---|---|
| **Feed Liquor** | | CL1 PF | | | | | | | | |
| **Temperature** (°C) | | 85 | | | 90 | | | | | |
| **Cumulative Residence Time** (h) | | 3 | | | 1 | | 2 | | 3 | |
| **Lime Addition.** (g/L feed) | | 80 | | | 33 | | 58 | | 141 | |
| **Lime Addition.** (kg/kg LC feed) | | 15 | | | 6.2 | | 11 | | 26 | |
| **Dilution** (∼%) | | - | | | 100 | | | | | |
| [Na] (g/L feed) | | 271 | | | 125 | | 129 | | 130 | |

| **Element** | **Feed** | **Residue** | **PF** | **Precip.** | **PF** | **Precip.** | **PF** | **Precip.** | **PF** | **Precip.** |
|---|---|---|---|---|---|---|---|---|---|---|
| | (mg/L) | (wt%) | (mg/L) | (%) | (mg/L) | (%) | (mg/L) | (%) | (mg/L) | (%) |
| **Al** | 2311 | 0.128 | 2378 | 4 | 788 | 29 | 633 | 43 | 565 | 42 |
| **Ca** | 15 | 51.12 | **10** | 0.2 | 12 | | 14 | | 20 | |
| **Cs** | - | **0.001** | - | | - | 83 | - | 88 | - | 91 |
| **Fe** | 315 | 0.142 | 53 | | 26 | | 18 | | **10** | |
| **K** | 5395 | 0.016 | 5490 | | 2385 | 7 | 2440 | 6 | 2392 | 2 |
| **Li** | 998 | 0.020 | 999 | 2 | 476 | 0 | 478 | 0 | 472 | 2 |
| **Mg** | 7 | 0.268 | **10** | | **10** | | **10** | | **10** | |
| **Mn** | 241 | 0.019 | 107 | 6 | 26 | 78 | 31 | 74 | **10** | 36 |
| **Na** | 270700 | 0.480 | 267000 | 0.1 | 125500 | 3 | 128700 | 1 | 129800 | 2 |
| **Rb** | - | **0.001** | - | | - | | **-** | | - | |
| **S** | **100** | **0.001** | **100** | 7 | **100** | 40 | **100** | 69 | **100** | 72 |
| **Si** | 8879 | 0.801 | 9076 | | 2523 | | 1334 | | 847 | |
| **F** | 36 | 0.000 | 29 | | | | | | | |

### Summary of LC Precipitation

**Table 4**

| **Test** | | **P-1** | | |
|---|---|---|---|---|
| **Feed Liquor** | | CR-3 | | |
| **Temperature** (°C) | | 100-90 | | |
| **Cumulative Residence Time (h)** | | 2 | | |
| **Carbonate Source** | | CO2 | | |
| **CO2(g) Addition.** (kg/kg LC) | | 2.6 | | |
| **Stoich. Addition.** (n-times) | | 3.3 | | |

| **Element** | **Feed** | **Residue** | **PF** | **Precip.** |
|---|---|---|---|---|
| | (mg/L) | (wt%) | (mg/L) | (%) |
| **Al** | 328 | 0.009 | 330 | 0.9 |
| **Ca** | 16 | 0.025 | 11 | 31 |
| **Cs** | - | **0.001** | - | |
| **Fe** | **10** | **0.001** | **10** | 0.3 |
| **K** | 45970 | 0.437 | 41650 | |
| **Li** | 9000 | 18.36 | 2672 | 69 |
| **Mg** | **10** | 0.005 | **10** | |
| **Mn** | **10** | **0.001** | **10** | 0.3 |
| **Na** | 110000 | 0.940 | 105000 | |
| **Rb** | - | 0.006 | - | - |
| **S** | **100** | **0.010** | **100** | - |
| **Si** | 2284 | 0.300 | 2150 | 1.3 |
| **F** | - | 0.058 | - | - |

## Claims

1. A process for extracting lithium values from a lithium silicate comprising the steps of:
a) heating a mixture of the lithium silicate and a concentrated sodium hydroxide solution with a concentration in a range of 40-80 wt% up to 350 °C;
b) diluting the heated mixture from step a) to 5-20% w/w caustic strength; and
c) removing aluminates and silicates from the diluted heated mixture from step
b) to produce a pregnant lithium solution.

2. The process according to claim 1, wherein heating said mixture comprises baking said mixture at a temperature in a temperature range of 250 °C to 350 °C at atmospheric pressure.

3. The process according to claim 2, wherein the mixture has a solids content of 40-50 wt% and is baked at a temperature in a range of 250 °C to 350 °C at atmospheric pressure for a period of 1 to 6 hours.

4. The process according to claim 1, wherein heating said mixture comprises heating said mixture in a temperature range of 200 °C to 300 °C in an autoclave.

5. The process according to claim 4, wherein the mixture has a solids content of 10-40 wt% and is heated in an autoclave at a temperature in a range of 200 °C to 300 °C for a period of 1 to 6 hours.

6. The process according to any one of claims 1 to 5, wherein the silicate is mixed with the caustic solution to produce a mixture having a solids content in a range of from 10-50 wt%.

7. The process according to any one of claims 1 to 6, wherein removing aluminates and silicates from the diluted heated mixture from step c) comprises adding lime to the diluted heated mixture in an amount sufficient to produce calcium aluminate and calcium silicate solids and separating said solids therefrom.

8. A process for recovering lithium values from a lithium silicate comprising the steps of:
a) extracting lithium values from a lithium silicate to produce a pregnant lithium solution according to any one of claims 1 to 7;
b) evaporating the pregnant lithium solution to increase a lithium concentration thereof; and,
c) recovering lithium carbonate and/or lithium hydroxide from the evaporated pregnant lithium solution.

9. The process according to claim 8, wherein recovering lithium carbonate comprises contacting the evaporated pregnant lithium solution with carbon dioxide to produce lithium carbonate solids and a barren lithium solution.

10. The process according to claim 8, wherein recovering lithium hydroxide comprises lowering the temperature of the evaporated pregnant lithium solution to produce lithium hydroxide solids and a barren lithium solution.

11. The process according to claim 9 or claim 10, wherein the barren lithium solution is treated with carbon dioxide to recover lithium carbonate therefrom.

12. The process according to any one of claims 9 to 11, wherein said solids are separated from the barren lithium solution.

13. The process according to any one of claims 9 to 12, wherein the barren lithium solution is recycled by mixing with said mixture of lithium silicate and caustic.

14. The process according to any one of claims 8 to 13, wherein evaporating the pregnant lithium solution increases the lithium concentration thereof to 8-10 g/L.

## Patentansprüche

1. Verfahren zum Extrahieren von Lithiumwerten aus einem Lithiumsilikat, umfassend die Schritte:
a) Erwärmen einer Mischung des Lithiumsilikats und einer konzentrierten Natriumhydroxidlösung mit einer Konzentration in einem Bereich von 40 bis 80 Gew.-% auf 350 °C;
b) Verdünnen der erwärmten Mischung aus Schritt a) auf 5 bis 20 Gew.-% Laugenfestigkeit; und
c) Entfernen von Aluminaten und Silikaten aus der verdünnten erwärmten Mischung aus Schritt b), um eine angereicherte Lithiumlösung herzustellen.

2. Verfahren nach Anspruch 1, wobei das Erwärmen der Mischung das Backen der Mischung bei einer Temperatur in einem Temperaturbereich von 250 °C bis 350 °C bei Atmosphärendruck umfasst.

3. Verfahren nach Anspruch 2, wobei die Mischung einen Feststoffgehalt von 40 bis 50 Gew.-% aufweist und bei einer Temperatur im Bereich von 250 °C bis 350 °C bei Atmosphärendruck für einen Zeitraum von 1 bis 6 Stunden gebacken wird.

4. Verfahren nach Anspruch 1, wobei das Erwärmen der Mischung das Erwärmen der Mischung in einem Temperaturbereich von 200 °C bis 300 °C in einem Autoklav umfasst.

5. Verfahren nach Anspruch 4, wobei die Mischung einen Feststoffgehalt von 10 bis 40 Gew.-% aufweist und in einem Autoklav bei einer Temperatur in einem Bereich von 200 °C bis 300 °C für einen Zeitraum von 1 bis 6 Stunden erwärmt wird.

6. Verfahren nach einem der Ansprüche 1 bis 5, wobei das Silikat mit der Ätzlösung gemischt wird, um eine Mischung mit einem Feststoffgehalt in einem Bereich von 10 bis 50 Gew.-% herzustellen.

7. Verfahren nach einem der Ansprüche 1 bis 6, wobei das Entfernen von Aluminaten und Silikaten aus der verdünnten erwärmten Mischung aus Schritt c) das Zugeben von Kalk zu der verdünnten erwärmten Mischung in einer ausreichenden Menge, um Calciumaluminat und Calciumsilikat-Feststoffe zu erzeugen, und das Trennen der Feststoffe daraus umfasst.

8. Verfahren zum Wiedergewinnen von Lithiumwerten aus einem Lithiumsilikat, umfassend die Schritte:
a) Extrahieren von Lithiumwerten aus einem Lithiumsilikat, um eine angereicherte Lithiumlösung nach einem der Ansprüche 1 bis 7 herzustellen;
b) Verdampfen der Lösung des angereicherten Lithiums, um deren Lithiumkonzentration zu erhöhen; und,
c) Rückgewinnen von Lithiumcarbonat und/oder Lithiumhydroxid aus der verdampften Lösung des angereicherten Lithiums.

9. Verfahren nach Anspruch 8, wobei die Rückgewinnung von Lithiumcarbonat das Inkontaktbringen der verdampften, angereicherten Lithiumlösung mit Kohlendioxid umfasst, um Lithiumcarbonat-Feststoffe und eine abgereicherte Lithiumlösung zu erzeugen.

10. Verfahren nach Anspruch 8, wobei die Rückgewinnung von Lithiumhydroxid das Senken der Temperatur der verdampften angereicherten Lithiumlösung umfasst, um Lithiumhydroxid-Feststoffe und eine abgereicherte Lithiumlösung herzustellen.

11. Verfahren nach Anspruch 9 oder Anspruch 10, wobei die abgereicherte Lithiumlösung mit Kohlendioxid behandelt wird, um daraus Lithiumcarbonat zurückzugewinnen.

12. Verfahren nach einem der Ansprüche 9 bis 11, wobei die Feststoffe von der abgereicherten Lithiumlösung getrennt werden.

13. Verfahren nach einem der Ansprüche 9 bis 12, wobei die abgereicherte Lithiumlösung durch Mischen mit der Mischung aus Lithiumsilikat und Ätzmittel recycelt wird.

14. Verfahren nach einem der Ansprüche 8 bis 13, wobei das Verdampfen der Lösung des angereicherten Lithiums die Lithiumkonzentration davon auf 8 bis 10 g/l erhöht.

## Revendications

1. Procédé d'extraction de valeurs de lithium à partir d'un silicate de lithium comprenant les étapes consistant à :
a) chauffer un mélange du silicate de lithium et d'une solution concentrée d'hydroxyde de sodium avec une concentration dans une plage de 40 à 80 % en poids jusqu'à 350 °C ;
b) diluer le mélange chauffé de l'étape a) à une puissance caustique de 5 à 20 % en poids/poids ; et
c) éliminer les aluminates et les silicates du mélange chauffé et dilué de l'étape b) pour produire une solution de lithium sursaturée.

2. Procédé selon la revendication 1, dans lequel le chauffage dudit mélange comprend la cuisson dudit mélange à une température dans une plage de températures de 250 °C à 350 °C à pression atmosphérique.

3. Procédé selon la revendication 2, dans lequel le mélange présente une teneur en solides de 40 à 50 % en poids et est cuit à une température dans une plage de 250 °C à 350 °C à pression atmosphérique pendant une période de 1 à 6 heures.

4. Procédé selon la revendication 1, dans lequel le chauffage dudit mélange comprend le chauffage dudit mélange dans une plage de températures de 200 °C à 300 °C dans un autoclave.

5. Procédé selon la revendication 4, dans lequel le mélange présente une teneur en solides de 10 à 40 % en poids et est chauffé dans un autoclave à une température dans une plage de 200 °C à 300 °C pendant une période de 1 à 6 heures.

6. Procédé selon l'une quelconque des revendications 1 à 5, dans lequel le silicate est mélangé avec la solution caustique pour produire un mélange présentant une teneur en solides dans une plage de 10 à 50 % en poids.

7. Procédé selon l'une quelconque des revendications 1 à 6, dans lequel l'élimination des aluminates et des silicates du mélange chauffé et dilué de l'étape c) comprend l'ajout de chaux au mélange chauffé et dilué en une quantité suffisante pour produire des solides d'aluminate de calcium et de silicate de calcium et la séparation desdits solides de celui-ci.

8. Procédé de récupération de valeurs de lithium à partir d'un silicate de lithium comprenant les étapes consistant à :
a) extraire des valeurs de lithium d'un silicate de lithium pour produire une solution de lithium sursaturée selon l'une quelconque des revendications 1 à 7 ;
b) évaporer la solution de lithium sursaturée pour augmenter une concentration en lithium de celle-ci ; et,
c) récupérer le carbonate de lithium et/ou l'hydroxyde de lithium à partir de la solution de lithium sursaturée évaporée.

9. Procédé selon la revendication 8, dans lequel la récupération du carbonate de lithium comprend la mise en contact de la solution de lithium sursaturée évaporée avec du dioxyde de carbone pour produire des solides de carbonate de lithium et une solution de lithium stérile.

10. Procédé selon la revendication 8, dans lequel la récupération de l'hydroxyde de lithium comprend l'abaissement de la température de la solution de lithium sursaturée évaporée pour produire des solides d'hydroxyde de lithium et une solution de lithium stérile.

11. Procédé selon la revendication 9 ou la revendication 10, dans lequel la solution de lithium stérile est traitée avec du dioxyde de carbone pour récupérer du carbonate de lithium à partir de celle-ci.

12. Procédé selon l'une quelconque des revendications 9 à 11, dans lequel lesdits solides sont séparés de la solution de lithium stérile.

13. Procédé selon l'une quelconque des revendications 9 à 12, dans lequel la solution de lithium stérile est recyclée par mélange avec ledit mélange de silicate de lithium et de caustique.

14. Procédé selon l'une quelconque des revendications 8 à 13, dans lequel l'évaporation de la solution de lithium sursaturée augmente la concentration en lithium de celle-ci jusqu'à 8 à 10 g/l.
